Europäisches Patentamt

European Patent Office

Office européen des brevets

(19)

(11) Publication number : **0 479 620 A1**

(12) **EUROPEAN PATENT APPLICATION**

(21) Application number : **91309145.0**

(22) Date of filing : **04.10.91**

(51) Int. Cl.⁵ : **F04B 11/00, F16L 55/027, F16L 55/05**

(30) Priority : **04.10.90 JP 268213/90**

(43) Date of publication of application : **08.04.92 Bulletin 92/15**

(84) Designated Contracting States : **DE FR GB IT**

(71) Applicant : **Hiraoka, Masayuki**
**6-7-302 Ushita Asahi 1-Chome, Higashi-ku Hiroshima City, Hiroshima Prefecture (JP)**

(72) Inventor : **Hiraoka, Masayuki**
**6-7-302 Ushita Asahi 1-Chome, Higashi-ku Hiroshima City, Hiroshima Prefecture (JP)**

(74) Representative : **Waldren, Robin Michael**
**Marks & Clerk, 57-60 Lincoln's Inn Fields London WC2A 3LS (GB)**

(54) **Filter device.**

(57) A filter device for damping pressure pulses or turbulence, eg. in a stream of liquid from a pump comprises a chamber (1,1a,1b) defining an enlarged region in a flow path (W1,W2). The chamber is shaped to allow formation of an air pocket (7,7a,7b). At least one spongy member is located in the chamber.

FIG.1.

EP 0 479 620 A1

The present invention relates to a filter device for reducing or eliminating pressure pulsing and/or turbulence in a stream of liquid.

This invention is applicable in any technical field requiring a filter device that can reduce or eliminate pressure pulsing or turbulence arising in a water or other liquid supply path.

Whenever water is moved by a pump, that stream of water contains pressure pulses and turbulence. Such pressure pulsing and turbulence may also, depending on the configuration of the water path, be present in water flowing under gravity. Pressure pulses arising in a stream of water can also generate secondary turbulence. This pulsing and turbulence can be a major obstacle to certain tests, experiments or uses involving a moving water stream. Once such experiment is described in Japanese Patent Specification No. 86-026068, entitled "A Method for Generating a Stream of Distinct Droplets by In-Water Sound Waves."

A known method of mitigating pressure pulses and/or turbulence in a moving stream of liquid is illustrated in Figure 5 of the accompanying drawings. As shown, a plurality of chambers (C) are provided extending from a pipe through which the liquid flows. The bulk elasticity of air trapped in the chambers is able to reduce pulse and turbulence.

As an example, when using the method according to the aforementioned Japanese Patent specification to demonstrate parabolic movement during tuition of physics, the slightest pulsing or turbulence in the water supply causes irregular water droplets to form and diffuse the water stream, ruining the result of the experiment. Therefore, for such experiments, pulsing and turbulence must be eliminated as far as possible. However, the multi-chamber device of Figure 5 still allows slight pulsing and turbulence to remain in the flow. The applicant has now devised a way of significantly improving on this known device, in the reduction of pressure pulsing and turbulence.

Thus, according to the present invention, there is provided a filter device for a stream of liquid, the device comprising a chamber defining an enlarged region in a flow path, the chamber being configured to allow the formation of an air pocket and at least one spongy member being located in the chamber.

Preferably, the at least one spongy member is positioned to protrude into the air pocket

In embodiments intended for use in a substantially horizontal flow path position, it is preferred to provide a pair of spongy members in the chamber, separated by a narrowed region of the chamber. End walls of the chamber may taper outwardly, narrowing in the direction of a respective inlet and outlet. Alternatively, the end walls may be substantially flat and touching respective outer surfaces of the spongy members.

When the device is intended for use in a substantially vertical flow path position, an outlet pipe may be provided, extending into the chamber from the top and contacting the at least one spongy member which is preferably seated on a perforated plate, located inside the chamber.

The present invention solves the technical problem by providing, along the path of a liquid supply containing pressure pulses and turbulence, a widened area formed, for example of vibration-resistant rubber or plastic or similar material. Within this widened area is provided a preferably elastic, porous, multi-holed spongy member through which the above mentioned water supply must pass. Further, as the water passes through the widened area and the spongy member, a pocket of trapped air is formed, into which one portion of the sponge-type material preferably protrudes. This configuration of spongy member and air-pocket creates an effective filter.

In the most preferred embodiments, when the water containing the pulsing and turbulence passes through the expanded area and the spongy member in its path, they are significantly reduced and in most cases, virtually eliminated by the compound effect of the elasticity of the sponge-type material itself, the bulk elasticity of the air in the air pocket and of the air in that portion of the sponge material that protrudes into the air pocket.

The present invention will be described in more detail by the following description of a preferred embodiment and with reference to the accompanying drawings, in which:-

Figure 1 shows an axial cross section through a first filter device according to the present invention, intended for use in a horizontal configuration;

Figure 2 shows an axial cross section through a second filter device according to the present invention, also intended for use in a horizontal configuration;

Figure 3 shows an axial cross section through a third filter device according to the present invention, intended for use in a vertical configuration;

Figure 4 shows equipment utilizing a filter device according to the present invention, the equipment being intended for explanation of movement in a paraholic path during physics tuition; and

Figure 5 shows a known device for reducing pressure pulsing and turbulence in a stream of water.

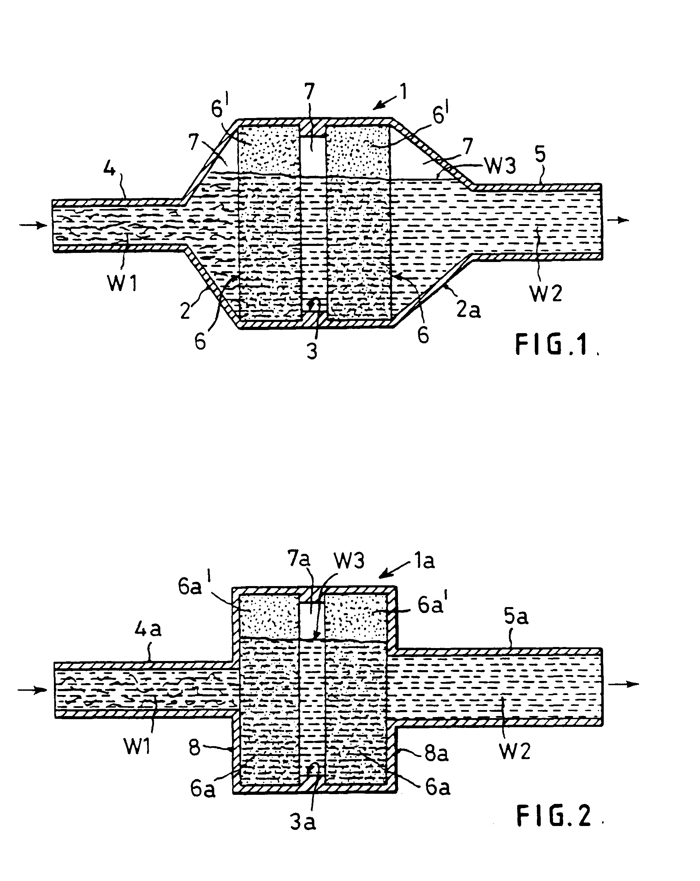

Referring to Figure 1, a filter device comprises a chamber (1) defining an expanded area in a water flow path. The chamber is in the form of a large cylinder on either end of which, extending outwardly, are gradually diminishing frusto-conical sections of round pipe (2), (2a). At the centre of the chamber, a narrowed section (3) of smaller internal diameter is formed.

A water supply pipe (4) is connected to the narrowed end of the frusto-conical section (2). At the other end of the chamber, a water discharge pipe (5), the diameter of which is larger than the diameter of the supply pipe (4), is connected to the small diameter end of the other frusto-conical section (2a).

This large cylinder of the chamber (1) including the narrowed section (3), the frusto-conical sections (2) and (2a), the water supply pipe (4), and the water discharge pipe (5) are integral and all made of a vibration-resistant material such as rubber or a plastics material.

A two-part elastic, resilient and compressible porous, multi-hole sponge piece (6) is made of foamed plastics or rubber. The two pieces are respectively located on each side of the narrowed section (3).

Thus, when a stream of water containing pulses and turbulence (W1) flows into the enlarged area of the chamber (1) from the water supply pipe (4), it passes through both spongy parts (6)(6) and flows out through the water-discharge pipe (5). In use, the filter is placed level and horizontal as shown in Figure 1. Therefore, a pocket of trapped and compressed air (7) forms at the top of the enlarged area. The upper ends (6′) (6′) of the sponge parts, protrude into this air pocket (7) so the air is separated into three areas, namely the top of narrowed section (3), and the upper regions of the frusto-conical sections (2) and (2a). However, there is also some trapped air (7) in the protruding portions (6′)(6′) of the sponge parts (6)(6). Thus, the three sections of air are actually in communication with each other.

When the stream of water (W1) containing pressure pulses and turbulence passes through the enlarged area of the chamber, the elasticity of the sponge parts (6)(6), and the bulk elasticity of the air pocket (7) and the air in the protruding sections (6′)(6′) of the sponge parts all work together to reduce and eliminate the pulse and turbulence such that the stream of water (W2) leaving through the water discharge pipe (5) is substantially free of pulsing and turbulence.

It has been found that the structure of the present invention is less effective if the sponge parts (6)(6) are eliminated and the air pocket (7) is used alone, or if the filter is placed vertically and the air pocket (7) is eliminated.

The water discharge pipe (5) has a larger diameter than the water intake pipe (4) in order to reduce resistance and facilitate stable flow of the substantially pulse and turbulence free water (W2). The same principle appears in a further two embodiments described.

Figure 2 shows another embodiment of the present invention. As in the previous embodiment, a filter device comprises a chamber (4) defining an enlarged region provided in a water supply path. However, this embodiment differs in that the walls (8) (8a) on both ends of the enlarged area (1a) are flat. Accordingly, the sponge pieces (5a) (6a) are placed such that one surface of each sponge piece contacts a flat wall (8) or (8a) respectively, at either end of the chamber and the other respective surface contacts a narrowed section (3a) in the middle of the chamber. An air pocket (7a) is therefore formed only in the central narrowed section (3a).

In operation, the air pocket (7a) is somewhat smaller than the one formed in embodiment shown in Figure 1, so the bulk elasticity of the air is reduced. However, the effectiveness of the filter device is nearly the same as the previous embodiment and it is somewhat easier to manufacture.

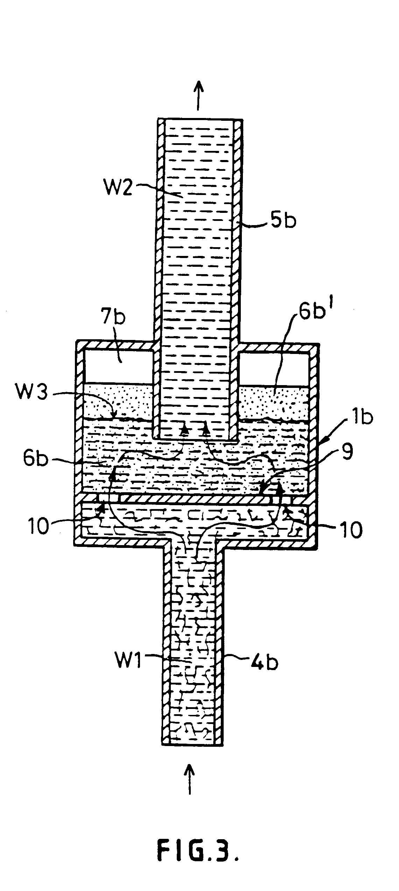

Figure 3 shows a third embodiment of a filter device according to the present invention but intended for use in a vertical position. A water intake pipe (4b) is connected to the bottom of an enlarged area defined by a chamber (1b), and a water discharge pipe (5b), the diameter of which is larger than the diameter of the intake pipe (4b) is connected at the top of the chamber. The discharge pipe extends down into the centre of the enlarged area. Towards the lower end of the enlarged area (1b), a cut-off plate (9) is provided having several flow holes (10) drilled through it near and around the outer circumference. Within the chamber (1b) and on the cut-off plate (9) is placed an elastic, porous, multi-holed sponge piece (6b) of a foamed rubber or plastics material. The water discharge pipe (5b) fits down into a cavity formed in the upper surface of the sponge (6b).

Thus, when a stream of water (W1) containing pressure pulses and turbulence enters the enlarged area through the intake pipe (4b), it flows in the direction of the arrows as shown, through the holes (10) in the cut-off plate (9), through the sponge (6b) and up and out through the discharge pipe (5b). As it does so, the water level (W3) in the enlarged area (1b) rises in the sponge (6b) to a point somewhat higher than the lower edge of the discharge pipe (5b). In this way, air is trapped and compressed in an air pocket (7b) and in that part of the sponge piece (6b) which protrudes into the air pocket.

The effectiveness of the filter device in this third embodiment is approximately the same as in the first two embodiments.

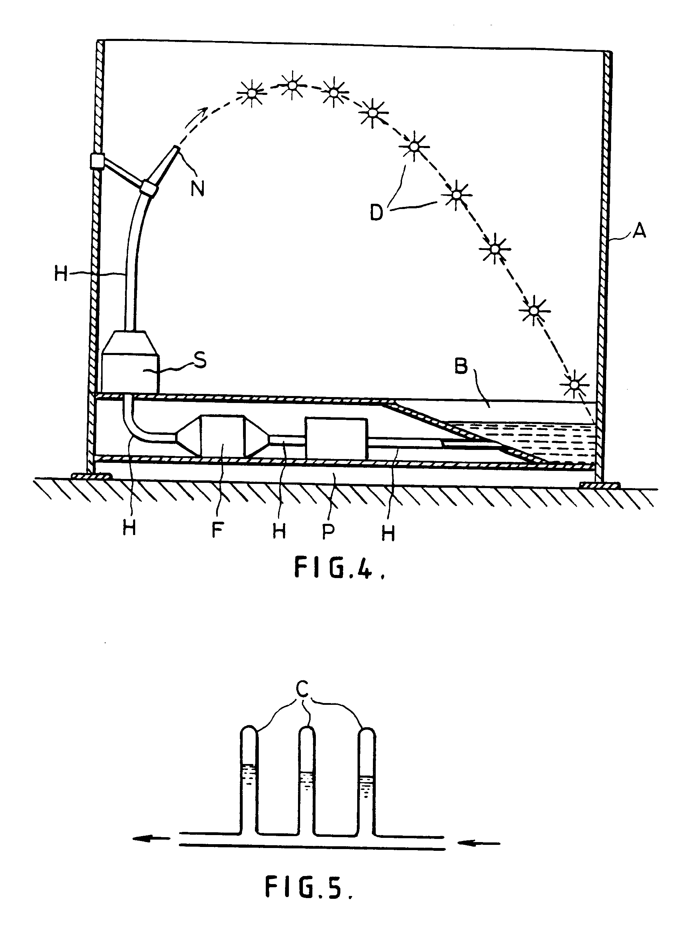

Figure 4 shows how a filter device according to the present invention may be used in conjunction with the kind of equipment which is the subject of the aforementioned Japanese Patent Specification No. 86-02068. What follows is a brief summary of this equipment.

Within a path of water supplied at a fixed pressure, an in-water vibration is generated (e.g., at a frequency of 60Hz) which causes in-water sound at the same frequency. The sound in turn, produces an area of increased molecular density in the water, occurring 60 times each second.

When these dense areas of water are ejected from the nozzle aperture, they form into separate water droplets. Then, when this stream of droplets is illuminated with a stroboscopic light source, the separate droplets shine and the shape of the parabola described by the stream can be seen clearly.

There now follows a detailed description of the use of a filter device according to the present invention, in conjunction with equipment as described in the aforementioned Japanese Patent Specification.

As shown in Figure 4, a box (A) is provided in its lower region with a reservoir of water (B). A water pipe (H) is connected to this reservoir, in-line with a gear pump (P) and a filter (F) according to the first described embodiment in the present invention. The water is pumped into an in-water sound generating device (S) where a vibration at 60Hz is provided through a rubber sheet in contact with the stream. A nozzle (N) pointing diagonally upwards is set on the end of the water pipe (H) beyond the in-water sound generating device (S).

The gear pump (P) produces a great deal of pulsing and turbulence. However, this is greatly reduced by the filter device (F). As a result, the stream of water (T) emerging from the nozzle (N) is formed into separate and distinct droplets (D). When this stream (T) is illuminated with stroboscopic light, the droplets (D) shine individually and the parabolic shape can be seen clearly.

If the filter device (F) is replaced by a conventional multi-chamber device as shown in Figure 5, the remaining pulse and turbulence produces numerous droplets other than those produced by the in-water sound. As a result, the water stream is diffused and no clear parabola line is observable.

Thus to summarise, when a stream of water containing pulsing and turbulence passes through an enlarged area defined by the chamber, the elasticity of a sponge-type material and the bulk elasticity of air operate together to reduce significantly and, in the most preferred embodiments, largely to eliminate the pulsing and turbulence. Furthermore, the structure of the filter is simple so it can be manufactured at relatively low cost.

## Claims

1. A filter device for a stream of liquid, the device comprising a chamber (1,1a,1b) defining an enlarged region in a flow path (W1,W2), the chamber being configured to allow the formation of an air pocket (7,7a,7b) characterised in that at least one spongy member (6,6a,6b) is located in the chamber.

2. A filter device according to claim 1, wherein the at least one spongy member (6,6a,6b) is positioned to protrude into the air pocket (7,7a,7b).

3. A filter device according to either preceding claim, intended for use in a substantially horizontal flow path (W1, W2) and comprising a pair of spongy members (6,6a) located in the chamber (1,1a) and separated by a narrowed region (3,3a) of the chamber (1,1a).

4. A filter device according to claim 3, wherein the chamber (1,1a) is provided with outwardly tapered end walls (2,2a) narrowing in the direction of a respective inlet and outlet (4,5).

5. A filter device according to claim 3, wherein the chamber (1a) is provided with substantially flat end walls (8,8a) touching respective outer surfaces of the spongy members (6a).

6. A filter device according to claim 1 or claim 2, intended for use in a substantially vertical flow path (W1,W2), wherein an outlet pipe (5b) extends into the chamber (1b) from the top and contacts the at least one spongy member (6b).

7. A filter device according to claim 6, wherein the at least one spongy member (6b) is seated on a perforated plate (9) located inside the chamber.

8. A filter device (F) according to any preceding claim, connected to a device (5) for producing vibrations in the liquid.

FIG.1.

FIG.2.

FIG.3.

FIG.4.

FIG.5.

EP 0 479 620 A1

European Patent Office

# EUROPEAN SEARCH REPORT

Application Number

EP 91 30 9145

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 319 072 (PAILLY) | 1,2,8 | F04B11/00 |
| Y | * the whole document * | 3,5 | F16L55/027 |
| | --- | | F16L55/05 |
| X | DE-A-2 127 198 (WIESNER) | 1,8 | |
| Y | * the whole document * | 4 | |
| | --- | | |
| Y | FR-A-791 649 (ROSSI) | 3-5 | |
| | * page 2, line 3 - line 21; figure * | | |
| | --- | | |
| A | US-A-2 630 833 (RAGSDALE) | 1,6,8 | |
| | * column 1, line 54 - column 2, line 51; figure 1 * | | |
| | --- | | |
| A | FR-A-2 359 298 (ESCHER) | 1,6,8 | |
| | * page 4, line 5 - page 7, line 4; figures * | | |
| | --- | | |
| A | DE-C-938 458 (MÖNCH) | 1,8 | |
| | * the whole document * | | |
| | --- | | |
| A | US-A-1 703 143 (GREVE) | 1,8 | |
| | * the whole document * | | |
| | | | TECHNICAL FIELDS SEARCHED (Int. Cl.5 ) |
| | ----- | | F04B |
| | | | F16L |

The present search report has been drawn up for all claims

| Place of search | Date of completion of the search | Examiner |
|---|---|---|
| THE HAGUE | 10 DECEMBER 1991 | VON ARX H.P. |

EPO FORM 1503 03.82 (P0401)